# EUROPÄISCHE PATENTSCHRIFT

(11) **EP 3 539 201 B1**
(45) Veröffentlichungstag und Bekanntmachung des Hinweises auf die Patenterteilung: **14.09.2022**
(21) Anmeldenummer: 17804123.2
(22) Anmeldetag: 14.11.2017
(51) Int. Cl.: H02K 7/06, H02K 5/10

(54) **LINEARANTRIEB**
LINEAR DRIVE
ENTRAÎNEMENT LINÉAIRE

(30) Priorität: 14.11.2016 DE 202016106361 U
(43) Veröffentlichungstag der Anmeldung: 18.09.2019
(73) Patentinhaber: DewertOkin Technology Group Co., Ltd., Jiaxing City, Zhejiang Province (CN)
(72) Erfinder: OBERNDÖRFER, Andreas, 33739 Bielefeld (DE); MARTIN, Jürgen, 32257 Bünde (DE)
(74) Vertreter: Lippert Stachow Patentanwälte Rechtsanwälte
(86) Internationale Anmeldenummer: PCT/EP2017/079207
(87) Internationale Veröffentlichungsnummer: WO 2018/087394

(56) Entgegenhaltungen:
- WO-A1-2016/045726
- CN-Y- 201 008 114
- DE-A1-102011 014 567
- DE-U1-202004 002 254
- DE-U1-202006 009 957
- DE-U1-202006 014 117
- DE-U1-202010 012 908

## Beschreibung

Die Erfindung betrifft ein Teleskoprohr, insbesondere zur Verwendung in einem Linearantrieb bzw. Linearmotor, welcher also eine Rotationsbewegung eines Antriebs, insbesondere eines Elektromotors, in eine Translationsbewegung umsetzt. Derartige Linearantriebe werden häufig zum motorischen Verstellen von Möbeln, z.B. Betten, insbesondere Krankenbetten, Stühlen oder dergleichen verwendet. Bevorzugt wird je ein Linearantrieb zum Verstellen der Liegefläche eines Krankenbetts verwendet, und zwar ein Linearantrieb für das Verstellen eines schwenkbar gelagerten Kopfteils und ein weiterer, vorzugsweise getrennt gesteuerter Linearantrieb zum Verstellen bzw. Verschwenken eines Fußteils dieser Liegefläche aus der Liegefläche hinaus nach oben um eine jeweilige Schwenkachse.

Ein derartiger Linearantrieb ist z.B. aus der deutschen Offenlegungsschrift DE 10 2011 014 567 A1 bekannt. Bei dieser Vorrichtung weist die Spindelaufnahme im Wesentlichen einen zylindrischen Grundkörper auf, in dem für eine drehfeste Verbindung an einer Stirnseite eine einseitig abgeflachte Einstecköffnung ausgebildet ist, in welche ein korrespondierend einseitig abgeflachtes hinteres Getriebeende einer Spindel drehfest eingesteckt ist. An dieser Spindelaufnahme ist um diesen Einsteckbereich ein gegenüber dem äußeren zylindrischen Hauptkörper verkleinert ausgebildeter Einsteckzylinder mit einem außenseitigen Ritzel vorgesehen, welches in eine komplementär ausgebildete Aufnahme formschlüssig in das Schneckenrad eingreift. Somit wird die Drehbewegung des Schneckenrads auf den Spindelhalter übertragen.

Obgleich derartige Linearantriebe eine sehr kompakte und zuverlässige Getriebekette darstellen, ist die Fertigung dieser speziellen Komponenten doch relativ aufwendig und insofern kostspielig, weil die Spindel mit dem außenseitigen Trapezgewinde von einem Ende her abgefräst, zur Erzeugung der Fügefläche abgeflacht und sodann an beiden Stirnenden mit Zapfen und Gewinden versehen werden muss, was mehrfache spanende Arbeitsschritte umfasst. Auch die Spindelaufnahme mit dem zylindrischen Außenkörper und dem Aufnahmeritzel ist aus Metall gefertigt und muss insofern spanend hergestellt werden, was ebenfalls aufwendig ist. Gleichzeitig wird aber die kompakte Bauform eines solchen Lineargetriebes gewünscht, so dass man nicht einfach ein größer gestaltetes Kunststoffgehäuse oder eine größere Anordnung mit stärkerem Kunststoff in dem beengten und vorgegebenen Bauraum verwenden kann.

Ausgehend von diesem Stand der Technik liegt der Erfindung das erste technische Problem zugrunde, diese Nachteile zumindest teilweise zu vermeiden und ein Lineargetriebe der eingangs genannten Art derart weiterzuentwickeln, dass diese Nachteile zumindest teilweise vermieden werden und insbesondere ein kompaktes, zuverlässiges Lineargetriebe vorzusehen, das zudem deutlich einfacher und damit kostengünstiger herzustellen ist.

Es wird ein Linearantrieb der eingangs genannten Art offenbart, bei dem an dem Antriebsende der Spindel mindestens ein Einschnitt, eine Ausnehmung oder dergleichen vorgesehen ist, dass zumindest der Spindelhaltebereich des Spindelhalters Kunststoff aufweist und dass mindestens ein Spannstift in den mindestens einen Einschnitt zwischen dem Spindelhalter und der Spindel eingesetzt ist. Vorteilhafte Weiterentwicklungen sind in den Unteransprüchen wiedergegeben.

Dieser Linearantrieb ist besonders dazu geeignet, hohe Lasten von 6000 bis 8000 Newton und mehr zu bewegen, wofür vorzugsweise zwei diametral gegenüberliegende sich in Längsrichtung erstreckende Einschnitte an der äußeren Mantelfläche des Spindelgewindes vorgesehen sind, vorzugsweise über eine Länge von 25 bis 30 mm mit einer Breite von etwa 1,5 - 2 mm, damit sodann zwei Stifte, eine Spannhülse oder ein Hohlspannstift mit einem entsprechend angepassten Stiftdurchmesser in das Stirnende dieser Einschnitte zwischen der äußeren Mantelfläche des Spindelhalters einsteckbar bzw. eintreibbar ist, wodurch die dort befindlichen Gewindeabschnitte des Innengewindes verformt werden und somit eine feste und unverlierbare Verbindung zwischen dem äußeren Spindelhalter und der aufgenommenen Spindel hergestellt wird. Erfindungsgemäß muss der Spindelhalter also nicht mehr als Metallteil gefertigt sein, sondern kann nunmehr als Kunststoffteil, insbesondere als Kunststoffspritzgussteil ausgebildet sein, z.B. umfassend oder vollständig hergestellt aus Polyamid oder POM.

Die offenbarte Ausgestaltung erlaubt somit eine besonders kompakte Bauweise, wenn der Spindelhalter in der Hohlachse des Schneckenrades angeordnet ist oder in Einbaulage zumindest teilweise von diesem aufgenommen ist.

Bei der bevorzugten Ausgestaltung umfasst der Spindelhalter einen rohrförmigen Aufnahmestutzen ausgebildet zur Aufnahme der Spindel, der sich in Einbaulage koaxial zur Spindellängsachse erstreckt. Dieser Aufnahmestutzen ist mit einem komplementär zum verwendeten Außengewinde der Spindel wirkenden Innengewinde versehen, vorzugsweise also mit einem inneren Trapezgewinde. Ferner umfasst der Spindelhalter einen Verbinder zur kraftschlüssigen Verbindung mit dem Schneckenrad, der insbesondere als umfänglich radial von der äußeren Mantelfläche des Aufnahmestutzens abragender Flansch ausgebildet ist, besonders bevorzugt als ein einstückig an dem Aufnahmestutzen angeformter Verbindungsflansch.

Bei einer besonders stabilen Ausführungsform für besonders hohe Lasten von 6000 bis 8000 Newton kann der Spindelhalter bzw. der Kunststoff des Spindelhalters faserverstärkt ausgebildet sein, insbesondere glasfaserverstärkt, z.B. mit einem Anteil von 10-30% Verstärkungsfüllung.

Diese Ausbildung bietet sich auch für die Ausbildung des Schneckenrads an, insbesondere wenn an diesem Schneckenrad ein zusätzlicher, seitlich von der durch die Zahnflanke definierten Ebene abragender Kupplungsstutzen ausgebildet ist und an dem Verbinder des Spindelhalters bzw. Verbindungflansch des Spindelhalters eine Fügefläche vorgesehen ist, die mit dieser längsverschieblich auf dem Kupplungsstutzen des Schneckenrads angeordneten Kupplung einer Notkupplung bzw. Notverstellung beim Einkuppeln verbindbar ist. Ein zwischen dem Schneckenrad und der Kupplung wirkendes Spannelement, vorzugsweise ausgebildet als Feder, drückt die Kupplung in die Eingriffstellung. Diese Kupplung bildet den Bestandteil einer Notkupplung und ermöglicht eine Notverstellung beim Auskuppeln, was z.B. bei Krankenbetten notwendig sein kann, um das Kopfende oder das Fußende schnell abzusenken, und zwar ohne Betätigung des Elektromotors.

Vorzugsweise handelt es sich um eine mechanische Kupplung, welche unbelastet in Eingriffstellung ist, also im nicht betätigten Zustand das Schneckenrad und die Spindel miteinander verbindet und nur bei Betätigung der Notkupplung bzw. Notverstellung einen Freilauf realisiert, in welcher die betätige Möbelkomponente, z.B. das Kopfteil eines Krankenbettes, schneller abgesenkt werden kann in die Horizontallage.

Die Notkupplung ist zur Übertragung der größeren Lasten vorzugsweise formschlüssig ausgebildet, kann aber auch reibschlüssig ausgebildet sein.

Die formschlüssige Notkupplung umfasst eine erste Verzahnung in mittelbarer oder in unmittelbarer, jedoch in drehfester Verbindung mit dem Schneckenrad. Eine weitere Verzahnung steht in mittelbarer oder in unmittelbarer, jedoch in drehfester Verbindung mit der Spindel bzw. dem Spindelhalter. Vorzugsweise sind die Verzahnungen zur Übertragung größerer Drehmomente als Keilwellen oder als derartig ausgebildete Strukturen ausgebildet. Wie eingangs erläutert, ist diese Verzahnung vorzugsweise als einstückiges Formteil an dem Spindelhalter ausgebildet, kann aber auch ein zusätzliches Bauteil darstellen.

Ferner umfasst die Notkupplung eine in Achsenlängsrichtung der Spindel verschiebbares Schiebeelement, welche in einer bevorzugten Ausführungsform ausgebildet ist als innenseitig hohle Schiebemuffe bzw. als Schiebehülse. Das Schiebeelement umfasst eine mit den Fügepartnern des Antriebsstrangs komplementäre Fügestruktur, mit denen diese das Schneckenrad und den Spindelhalter in der unbelasteten Ruhestellung drehfest miteinander verbindet.

Die Betätigung dieser Notverstellung erfolgt üblicherweise über ein Zugmittelgetriebe umfassend seitlich an dem Bett angeordnete Notzüge, die z.B. einen Bowdenzug umfassen, welcher die Kupplung aus der durch die Feder vorgespannten Eingriffstellung in die Freigabestellung überführt und somit die erforderliche Notverstellung der Spindel bzw. des betätigten Möbelstücks zulässt.

Diese Ausgestaltung ohne Notkupplung umfasst ein Schneckenrad mit mindestens einer innerhalb der Hohlachse ausgebildeten Füge- bzw. Keilfläche zur kraftschlüssigen und drehfesten Aufnahme des komplementär zum Einstecken in diese mindestens eine Fügefläche ausgebildeten Spindelhalters.

Die Variante mit Notkupplung weist hingegen an dem Schneckenrad einen von der Ebene der Zahnflanke abstehenden Kupplungsstutzen auf, der drehfest mit dem Schiebelement der Kupplung verbindbar ist und hierzu vorzugsweise außenseitige Keile umfasst, auf denen die Kupplung längsverschieblich und drehverbunden aufsitzt. Bei dieser Ausführungsform weist die Spindelhülse des Spindelhalters einen radial von der Längsachse abragenden Kupplungsflansch mit Eingreifflächen auf, welche mit der Kupplung in der Eingriffstellung eine drehfeste Wirkverbindung eingehen.

Vorzugsweise ist die Kupplung als Klauenkupplung ausgebildet und die Fügeflächen des Kupplungsstutzens sowie dem komplementär an dem Spindelhalter ausgebildeten Kupplungsflansch sind als entsprechende Keile oder Keilstücke ausgestaltet, mit denen die Kupplung in den verschiedenen Stellungen drehfest zusammenwirkt.

Die Kupplung umfasst als Schiebeelement vorzugsweise eine Schiebemuffe, also einen ringförmigen den Kupplungsstutzen umschließenden Ringkörper, der zwischen der Eingriffstellung und der Freistellung verschiebbar ist, so dass die Schiebemuffe in der Eingriffstellung ein auf den Kupplungsstutzen wirkendes Drehmoment auf den Kupplungsflansch des Spindelhalters überträgt und dieses in der Freistellung nicht überträgt.

Das Lösen der Kupplung bzw. der Schiebemuffe erfolgt über eine Notverstellung bildendes Zugmittel zur Betätigung einer federgespannten Zugstange, welche eine Schwinge aus einer federvorgespannten Eingriffstellung gegen die Kraft einer Feder in die freigebende Notlösestellung überführt bzw. zieht. Diese Schwinge ist insbesondere als Wippe ausgestaltet, verschwenkt sich also um eine Schwenkachse, wobei an einem Betätigungsende der Wippe die federvorgespannte Zugstange angreift und das gegenüberliegende der Wippe an der Kupplung angreift, vorzugsweise über eine Nut-/Federverbindung.

Die Außenseite der Kupplung kann z. B. eine umfängliche Nut aufweisen, in welche beidseitig an der Schwinge ausgebildete Eigriffzapfen eingreifen.

Durch eine trennbare Ausbildung des Getriebewinkels wird somit ein Baukastensystem bereitgestellt, welches durch Austausch des Schneckenrads sowie des Spindelhalters einfach umgestaltbar ist. Es bestehen somit grundsätzlich zwei Ausführungsformen, nämlich eine ohne und eine mit Kupplung. Diejenige ohne Kupplung ist gegenüber der mit Kupplung um etwa 30 bis 50 mm kürzer, weil keine Kupplung benötigt wird. Somit kann das Hubrohr um diesen Betrag weiter in das Außenrohr eingefahren werden.

Bei einer Ausgestaltung weist das Lineargetriebe eine Schlingfederbremse auf. Die Schlingfederbremse benötigt einen Zapfen bzw. Stutzen, auf dem die Wicklungen der Schlingfeder aufgebracht werden können. Hierzu bietet sich die Ausgestaltung eines Bremsstutzens bzw. Bremszapfens unmittelbar an dem Schneckenrad an, und zwar vorzugsweise bei einer Ausführungsform mit Kupplung gegenüberliegend von dem Kupplungsstutzen seitlich abragend von dem Schneckenrad. Dieser Bremsstutzen kann zusätzliche Taschen oder Ausnehmungen für ein Schmiermittel aufweisen. In Einbaulage umschließen die Wicklungen der Schlingfeder diesen Bremsstutzen, wobei der Innendurchmesser der Wicklungen der Schlingfeder geringfügig kleiner ist als der Außendurchmesser des Bremsstutzens zur Realisierung der erforderlichen Bremsleistung. Mit der Schlingfederbremse wird eine Selbsthemmung des Lineargetriebes auch dann gewährleistet, wenn der Elektromotor stromfrei ist.

Eine alternative Bremsanordnung steht mit der Motorwelle in reibschlüssiger Wirkverbindung, wobei Reibflächen unter federelastischer Vorspannung konstant auf die Motorwelle einwirken und ein konstantes Bremsmoment erzeugen. Das Bremsmoment ist im Vergleich zu einem durch die Schlingfeder erzeugten Bremsmoment verschwindend gering, fördert jedoch die mechanische innere Reibung des Antriebsstranges um das erforderliche Maß zur Erzielung der Selbsthemmung. In einer Ausführung ist das Bremselement, welches auf die Motorwelle aufgesetzt ist, mit einem Freilauf versehen, so dass es in einer ersten Drehrichtung mit der Motorwelle rotiert und in einer zweiten, der ersten Drehrichtung entgegengesetzten Drehrichtung, durch den Freilauf drehfest gehalten wird und ein Bremsmoment auf die Motorwelle erzeugt.

Somit können die wesentlichen Bestandteile des Lineargetriebes aus Kunststoff bestehen, insbesondere als Kunststoffspritzgussteil ausgebildet sein. Dabei ist es vorteilhaft, die Wandstärken dieser Teile möglichst einheitlich auszubilden, damit im Rahmen eines Abkühlungsprozesses keine Risse, Lunker oder sonstige Verspannungen entstehen, also kein Wärmeverzug auftritt, was bei dickwandigen Werkstücken eher ein Problem ist. Zu diesem Zweck sind bei dickeren Werkstücken, also alles ab einer Wandstärke von 3 mm im Vollmaterial deshalb Hohlräume, Öffnungen, Ausnehmungen oder dergleichen vorgesehen.

Zudem wird eine Notkupplung offenbart, also die Verbindungsvorrichtung für das Zugmittel zum Durchführen einer Notverstellung der in dem Lineargetriebe eingesetzten Notlösekupplung.

Wie zuvor erläutert, ist diese Notverstellung z.B. erforderlich, wenn das Krankenbett aus der Position mit angewinkeltem Kopf- und/oder Fußteil schnell in die horizontal erstreckende Ruheposition gebracht werden muss, z.B. bei einem Notfall.

Hierzu umfasst ein aus dem Stand der Technik bekanntes Lineargetriebe für das Krankenbett eine Notkupplung bzw. Notverstellung, welche vorzugsweise an jeder Seite des Bettes angeordnete Notgriffe umfasst, mit denen diese Notverstellung durchführbar ist, um das Lineargetriebe aus der eingekuppelten Eingriffstellung in die Freilaufstellung zu überführen, womit das angewinkelte Bett rasch, also ohne die Hemmung des Elektromotors und des Getriebes, in die Horizontale verstellt werden kann.

Diese Notzüge beim Stand der Technik umfassen ferner Bowdenzüge, die über Umlenkrollen geführt dann über eine im Wesentlichen koaxial zu der Spindel angeordneten Bowdenzughalter wirkt, insbesondere an diesem mittels an den Enden des jeweiligen Bowdenzugs vorgesehenen Seilkauschen in diesem in entsprechenden Aufnahmeöffnungen formschlüssig eingesetzt sind. Die bestehenden Vorrichtungen haben den Nachteil, dass die nicht betätigte Seite bei der Betätigung erschlafft und sich so häufig aus einer Halterung für den Notzug löst oder lösen kann. Dieses kann nachteilig sein bei einer Operation oder bei raschen Bewegungen im Notfall, wobei sich dieser heraushängende Notzug verhaken kann.

Es wird ausgehend von diesem Stand der Technik eine Notkupplung für eine Notverstellung vorgesehen, welche das ungewollte Erschlaffen des nicht betätigten Notzugs weitestgehend unterbindet.

Dieses wird bei einer Notkupplung für eine Notverstellung der eingangs genannten Art bereits dadurch realisiert, dass der Bowdenzughalter drehbar mit einem ersten Ende einer Zugstange verbunden ist, die mit einem zweiten Ende an der Notkupplung angreift.Diese drehbare Ausbildung hat besondere Vorteile, weil der Bowdenzughalter somit als Zwischenkoppel fungiert, die einen Zug des Notzugs auf der einen Seite des Bettes auf der anderen, nicht betätigten Seite so ausgleicht, dass diese nicht betätigte Seite angezogen bleibt, jedenfalls aber nur geringfügig, maximal 10% oder gar nicht erschlafft, jedenfalls aber sich der Notgriff somit nicht aus der Halterung löst.

Vorzugsweise ist zwischen Zugstange und Bowdenzughalter ein Stift ausgebildet, welcher die beiden Teile drehbar miteinander verbindet. Besonders bevorzugt weist die Zugstange einen sich quer zu deren Längsachse erstreckenden Zapfen auf, auf welcher der Bowdenzughalter drehbar aufsitzt oder aufgeschnappt ist.

Der Bowdenzughalter erstreckt sich somit in Einbaulage wie ein T quer erstreckend zur Längsachse der Zugstange, und zwar vorzugsweise an dessen in Einbaulage vorderen Stirnende, wobei die Schwenk- bzw. Drehachse zwischen Bowdenzughalter und Zugstange vorzugsweise in der Mitte des Bowdenzughalters angreift, so dass also die Befestigung der Bowdenzüge seitlich von diesem zentralen Schwenk- bzw. Drehpunkt erfolgt.

Der Bowdenzughalter ist dann so ausgebildet, dass dieser in der Ruhestellung mit den Rückseitigen, also der Zugstange zugewandten Seite gegen Anlageflächen der Notkupplung anliegt.

Zur Realisierung einer harmonischen, also geschmeidigen Bewegung können zwischen diesen Anlageflächen und dem Bowdenzughalter Abroll- bzw. Abgleitflächen ausgebildet sein, die bevorzugt als halbkreisförmige Vorsprünge ausgebildet sind.

Bei einer bevorzugten Weiterentwicklung sind diese rückseitigen Anlageflächen des Bowdenzughalters der Mitte nach hinten verlaufend abgeschrägt, insbesondere in einem Winkel von etwa 45°, um somit bei einer Betätigung des Bowdenzughalters auf einer Seite eine Streckung des nichtbelasteten Bowdenzugs auf der entgegengesetzten Seite nach Art einer Wippe zu realisieren, um somit also ein unbeabsichtigtes Herausspringen des nicht betätigten Bowdenzugs durch Erschlaffung noch besser zu vermeiden. Ferner erfolgt bei einseitiger Betätigung des Bowdenzugs durch die schräge der rückseitigen Anlageflächen eine zusätzliche Verlagerung des Zapfens um das Maß entsprechend der Verlagerung des Bowdenzughalters 58.

Der Bowdenzughalter kann an einem Gehäuse des Linearantriebs ausgebildet sein oder über eine getrennt Befestigungseinrichtung an einem anderen Bauteil des Linearantriebs oder Bettes befestigt sein. Besonders bevorzugt ist dieser an einer Schelle vorgesehen, welche an dem stationären Außenrohr des Linearantriebs befestigt ist.

Der Bowdenzughalter ist vorzugsweise als Kunststoffspritzgussteil ausgebildet und umfasst bevorzugt eine mittige Aufnahme ausgebildet zum drehbaren Einsetzen eines mit der Zugstange verbundenen Drehstiftes, sowie zwei seitlich äquidistant von diesem mittleren Bereich beabstandete Einstecköffnungen für die Aufnahme der Enden der Bowdenzüge bzw. der an den Enden der Bowdenzugs vorgesehenen Seilkauschen.

Die Erfindung betrifft eine Stirnabdeckung zur mediendichten Abdichtung eines Teleskoprohrs, insbesondere eines Linearantriebs gemäß dem Oberbegriff des unabhängigen Anspruchs.

DE 20 2004 002 254 U1 offenbart einen zuvor beschriebenen Linearantrieb mit einem beschriebenen Teleskoprohr. Weiterer Stand der Technik ist bekannt aus DE 20 2006 014 117 U1, DE 10 2011 014 567 A1, DE 20 2010 012 908 U1, WO 2016/045726 A1, CN 201 008 114 Y sowie DE 20 2006 009 957 U1.

Das Teleskoprohr eines Linearantriebs umfasst ein Außenrohr, das ausgebildet zur Aufnahme eines relativ zu diesem längsverschieblichen Hubrohrs ist. Ferner umfasst dieses ein - hinteres - Antriebsende, durch welches sich eine elektromotorisch angetriebene Spindel erstreckt, auf der eine durch Drehung der Spindel längsverschiebliche Spindelmutter sitzt, die an dem Hubrohr angreift. Schließlich weist das Teleskoprohr ein Vorder- oder Stirnende auf, aus welchem das Innenrohr aus dem Außenrohr herausragt. Die Stirnabdeckung verschließt dieses Stirn- bzw. Vorderende, um einen Medieneintritt zumindest an dem Vorderende zu unterbinden, wozu die Stirnabdeckung eine Dichtung mit mindestens einer Dichtlippe umfasst.

Zur Abdichtung derartig relativ beweglicher Teile werden im Stand der Technik, so z.B. in DE 10 2008 028 335 B3 zwei auf ineinander sitzenden Rohren aufsetzbare Endkappen mit einem dazwischen angeordneten Filzring oder einem O-Ring verwendet. Diese Filz- bzw. O-Ringe können aber nur bis maximal 5 bis 10 Prozent ihrer Radialausdehnung komprimiert werden bevor eine Beschädigung des Dichtelements auftritt. Dieses ist aber bei den bestehenden Fertigungstoleranzen nicht immer ausreichend bzw. bedingt eine kostspielige Qualitätskontrolle oder auch schnelle Defekte bzw. Undichtigkeit.

Ausgehend von diesem Stand der Technik liegt der Erfindung somit ferner das technische Problem zugrunde, diese Nachteile zumindest teilweise zu vermeiden und eine Stirnabdeckung der eingangs genannten Art derart weiterzuentwickeln, dass diese Nachteile zumindest teilweise vermieden werden und insbesondere eine Stirnabdeckung vorzusehen, die eine zuverlässige Dichtung auch bei größeren Toleranzen zwischen den Fügepartnern (Außenrohr, Hubrohr und Stirnabdeckung) ermöglicht, insbesondere bei einem stationären Außenrohr und einem verschieblich in diesem aufgenommenen Hubrohr, insbesondere verwendet in einem zuvor beschriebenen Linearantrieb.

Erfindungsgemäß wird dieses technische Problem bei einer Stirnabdeckung der eingangs genannten Art bereits durch die Merkmale des unabhängigen Anspruchs gelöst. Vorteilhafte Weiterentwicklungen sind in den die Stirnabdeckung betreffenden Unteransprüchen wiedergegeben.

Die somit bereitgestellte "Federdichtung" ist sehr nachgiebig und robust und kann deshalb mit überraschend einfachen Mitteln große Fertigungstoleranzen aufnehmen, z. B. zwischen 0,5 bis 1 mm. Diese Lösung ist damit sehr nachgiebig hinsichtlich eines fehlerhaften Einbaus und deshalb einfach zu montieren. Die Feder zieht die Dichtlippe nämlich stets außenseitig optimal eng und umfänglich auf die äußere Mantelfläche des Hubrohrs. Die Dichtlippe schmiegt sich somit stets dichtend an die äußere Mantelfläche des Hubrohrs an. In erfindungsgemäßer Weise wird durch Kombination der guten Nachgiebigkeit der Dichtung mitsamt der Dichtlippe und der im Bereich der Dichtlippe aufgesetzten Feder eine erhöhte Andruckkraft der Dichtlippe auf das Hubrohr realisiert, während im Übrigen die Dichtung in sich nachgiebig und flexibel bleibt. Ferner kann der Werkstoff der Dichtung gute Gleiteigenschaften gegenüber dem Reibpartner des Hubrohrs aufweisen.

Diese Feder, die in die Dichtlippe eingearbeitet sein kann, kompensiert auf besonders einfache Weise alle auftretenden Toleranzen, insbesondere des Hubrohrs.

Besonders bevorzugt ist die Feder der Federdichtung als Spiralfeder ausgebildet, die die Dichtung für das Hubrohr vollumfänglich umschließt, größenmäßig somit auch auf das Hubrohr abgestimmt ist. Die Spiralfeder stellt also neben die Eigenfederung der Dichtung eine zusätzlich umfänglich andrückende Federkraft bereit.

Anstelle der Spiralfeder kann auch ein weiteres Spanngummi als Feder eingesetzt werden.

Die vorgeschlagene federgespannte Dichtung realisiert somit die sog. "Waschstraßentauglichkeit" gemäß IP67W, also eine Abdichtung gegenüber hartem Strahlwasser, bei hohen Temperaturen und unter Verwendung von Chemikalien.

Die Federdichtung ist vorzugsweise angepasst an die Geometrie der Stirnabdeckung. Erfindungsgemäß umfasst diese eine stirnseitig das Außenrohr abdeckende und die Hauptdichtebene definierende Dichtplatte, die in der Mitte die federgespannte Dichtlippe zur umschließenden Anlage an das Hubrohr umfasst, und deren äußere Umfangsfläche einen Außenrand zur umgreifenden Anlage am dem Außenrohr umfasst. Besonders bevorzugt erstreckt sich die federgespannte Dichtlippe aus der Hauptdichtebene nach vorne und der Außenrand von dieser Hauptdichtebene nach hinten.

Die Stirnabdeckung ist ausgebildet zur einfassenden Aufnahme der Federdichtung in Einbaulage, was erfindungsgemäß durch Vorsehen einer auf das Stirnende des Teleskoprohrs aufsetzbaren Aufsatzkappe erfolgt. Dieses erfolgt dadurch, dass diese Aufsatzkappe neben dem stirnseitig, flächig das Außenrohr abdeckenden Abdeckbereich ferner einen Aufnahmeraum für die Federdichtung aufweist. Dieser Aufnahmeraum, der aus der Hauptdichtebene der Stirnabdeckung nach vorne ragt, kann auch eine zweite Hubrohrführung bilden. Eine besonders gute Führung des Hubrohrs und guter Ausgleich von Toleranzunterschieden wird realisiert, indem auf der Innenseite des Außenrohrs eine erste Hubrohrführung eingefasst von der außenseitig auf das Teleskoprohr aufsetzbaren Stirnabdeckung vorgesehen ist.

Die Stirnabdeckung umfasst eine sich in einer Verschlussebene erstreckende Aufsatzkappe, die in Einbaulage quer zur Längsachse des Teleskoprohrs angeordnet ist, einen außenseitig an dieser Verschlusskappe vorgesehenen und quer nach hinten von der Verschlussebene ersteckenden außenseitigen Umfangsrand zum außenseitigen Einfassen des Außenrohrs, einen nach vorne von der Verschlussebene ausgebildeten Aufnahmeraum für die Federdichtung sowie eine an dem vorderseitigen Rand dieses Aufnahmeraums ausgebildete zweite Hubrohrführung. Diese als Aufsatzkappe ausgebildete Stirnabdeckung ist bevorzugt als Kunststoffspritzgussteil ausgebildet.

In der folgenden ausführlichen Beschreibung wird auf die beigefügten Zeichnungen Bezug genommen, die Teil dieser Erfindungsbeschreibung bilden und in denen zur Veranschaulichung spezifischer Ausführungsformen gezeigt sind, mit denen die Erfindung ausgeübt werden kann. In dieser Hinsicht wird die Richtungsterminologie wie etwa "oben", "unten", "vorne", "hinten", "vorderes", "hinteres", usw. in Bezug auf die Orientierungen der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist.

Bezugszeichenlinien sind Linien, die das Bezugszeichen mit dem betreffenden Teil verbinden. Ein Pfeil hingegen, der kein Teil berührt, bezieht sich auf eine gesamte Einheit, auf die er gerichtet ist. Die Figuren sind im Übrigen nicht unbedingt maßstäblich. Zur Veranschaulichung von Details können möglichweise bestimmte Bereiche übertrieben groß dargestellt sein. Darüber hinaus können die Zeichnungen plakativ vereinfacht sein und enthalten nicht jedes bei der praktischen Ausführung gegebenenfalls vorhandene Detail. Die Begriffe "oben" und "unten" beziehen sich auf die Darstellung in den Figuren. Ferner ist aus Gründen der besseren Übersichtlichkeit nur jeweils ein Teil mit einem Bezugszeichen versehen, wenn mehrere entsprechende Teile vorgesehen sind. Es zeigen:
- Figur 1: eine perspektivische Stirnansicht einer Motoreinheit umfassend einen Elektromotor mit daran befestigtem Getriebewinkel und in diesem aufgenommenen Schneckenrad gemäß der ersten Ausführungsform ohne Kupplung;
- Figur 2: eine isometrische Frontansicht der Motoreinheit gemäß Figur 1;
- Figur 3: eine isometrische Ansicht des Spindelhalters gemäß der ersten Ausführungsform ohne Kupplung;
- Figur 4: einen vergrößerten Längsschnitt des getriebeseitigen Endes des Gehäuses des Linearantriebs der Ausführungsform ohne Kupplung;
- Figur 5: eine isometrische Ansicht einer Spindel mit zwei diametral gegenüberliegenden Einschnitten am getriebeseitigen Ende;
- Figur 6: einen Längsschnitt des Linearantriebs gemäß der ersten Ausführungsform bei teilweise ausgefahrenem Hubrohr;
- Figur 7: einen Längsschnitt des Außenrohrs des Teleskoprohrs ohne Hubrohr;
- Figur 8: eine Stirnansicht einer Motoreinheit umfassend einen Elektromotor mit daran befestigtem Getriebewinkel und in diesem aufgenommenen Schneckenrad gemäß der zweiten Ausführungsform mit Kupplung;
- Figur 9: eine isometrische Seitenansicht der Motoreinheit gemäß Figur 8;
- Figur 10: einen stirnseitigen Längsschnitt durch die Motoreinheit mit der Kupplung in ausgekuppelter Freigabestellung (Notstellung);
- Figur 11: die Ansicht gemäß Figur 10 mit der Kupplung in eingekuppelter Eingriffstellung;
- Figur 12: eine isometrische Draufsicht des als Notverstellung fungierenden Zugmittels und der Wippe zur Betätigung der Kupplung in eingekuppelter Eingriffstellung;
- Figur 13: eine vergrößerte isometrische Draufsicht der Notverstellung in ausgekuppelter Freigabestellung bei angezogenem Zugmittel;
- Figur 14: einen vergrößerten isometrischen Längsschnitt der federgespannten Anordnung der Zugstange im Gehäuse;

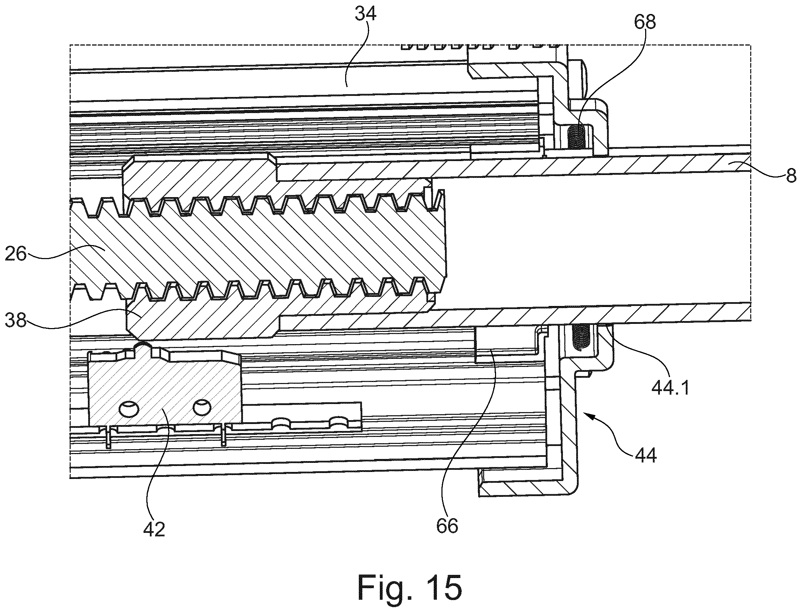

- Figur 15: einen vergrößerten isometrischen Längsschnitt des vorderen Endes des Teleskoprohrs bei ausgefahrenem Hubrohr;
- Figur 16: einen Längsschnitt des getriebeseitigen Endes der ersten Ausführungsform des Linearantriebs zur Verdeutlichung der zusätzlich gewonnen Einfahrstrecke des Hubrohrs durch Weglassen der Kupplung;
- Figur 17: einen vergrößerten Längsschnitt des frontseitigen Teleskoprohrendes mit der erfindungsgemäßen Stirnabdeckung;
- Figur 18: eine Längsansicht eines Linearantriebs; und
- Figur 19: eine vergrößerte Draufsicht einer alternativen Ausführungsform der Notverstellung ohne Zugmittel.

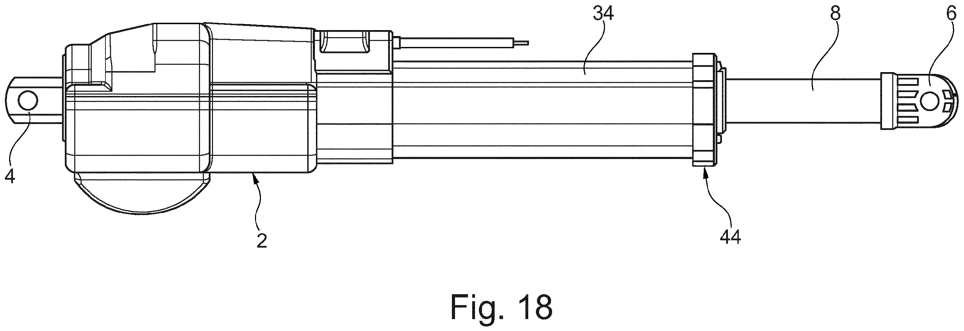

Der gesamte Linearantrieb gemäß allen Aspekten der Erfindung ist in einer Seitenansicht in der Figur 18 dargestellt.

Dieses besteht im Wesentlichen aus einem zusammensetzbaren Gehäuse 2 mit einem antriebseitigen Ende, das verbreitert ausgebildet ist zur Aufnahme eines Elektromotors 10 mit einem Getriebewinkel 14. An dem getriebeseitig hinteren Ende des Gehäuses 2 ist ein hinterer Gabelkopf 4. Koaxial angeordnet zu diesem hinteren Gabelkopf 4 ist an dem distalen äußeren Ende eines verschieblich in einem Außenrohr aufgenommenen Hubrohrs 8 ein vorderer Gabelkopf 6 befestigt. Das Hubrohr 8 ist mittels des Linearantriebs in axialer Längsrichtung ein- und ausfahrbar aus einem in dem mittleren Abschnitt des Gehäuses 2 teilweise aufgenommenen Teleskoprohrs. Der hintere Gabelkopf 4 und der vordere Gabelkopf 6 kann somit an einem Bett oder anderem Möbelstück in bekannter Weise befestigt werden zur Umsetzung einer Verstellung, z.B. zum motorischen Verschwenken des Kopfoder Fußendes eines Bettes. Eine Stirnabdeckung 44 dichtet das vorderseitige Stirnende zwischen dem Außenrohr 34 und dem verschieblich aufgenommenen Hubrohr 8 des Teleskoprohrs gegen Eintritt von drückendem Strahlwasser gemäß IP67W ab.

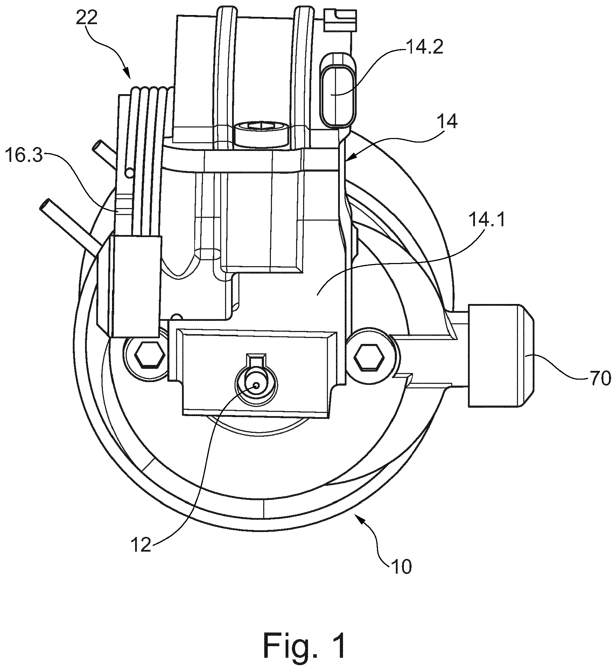

Die Figur 1 zeigt eine Stirnansicht einer in dem Getriebeende des Lineargetriebes eingebauten Motoreinheit umfassend einen Elektromotor 10, aus dessen Vorderende eine sich entlang einer Schneckenlängsachse erstreckende, durch den Elektromotor angetriebene Schneckenwelle 12 ragt, die sich in einen vorderseitig an dem Elektromotor 10 befestigten Getriebewinkel 14 erstreckt und dort die äußere Zahnflanke 16.1 eines Schneckenrads 16 kämmt und dieses somit antreibt.

Der Getriebewinkel 14 ist trennbar ausgebildet und umfasst zwei miteinander verschraubbare Halbschalen 14.1 und 14.2. Eine erste - untere - Halbschale 14.1 ist auf der Vorderseite des Elektromotors 10 aufgesetzt und nimmt die Schneckenwelle 12 in sich auf. Diese erste Halbschale 14.1 bildet mit der zweiten - oberen - Halbeschale 14.2 einen geschlossenen Ringraum, der das jeweilige Schneckenrad 16 über zwei auf Lagersitzen der Hohlachse 16.2 drehbar sitzenden Lagern 18, 20 aufnimmt.

Das Schneckenrad 16 umfasst an der äußeren Mantelfläche Zahnflanken 16.1 und eine sich axial in Längsrichtung erstreckende, durchgängige Hohlachse 16.2, wobei diese Hohlachse beidseitig neben der Zahnflanke 16.1 Sitzflächen für Lager 18, 20 bilden, mit denen das Schneckenrad 16 in dem Getriebewinkel 14 drehbar aufgenommen ist.

Zum rückseitigen Ende des Linearantriebs hin erstreckt sich das Schneckenrad 16 unter Bildung eines Absatzes mit verringertem Außendurchmesser in einen Bremsstutzen 16.3, der einstückig an dem Schneckenrad 16 angeformt ist und auf dem die Wicklungen einer Schlingfederbremse 22 in bekannter Weise aufgewickelt sind. Die Wicklungen 22 der Schlingfederbremse haben einen etwas engeren Innendurchmesser als der Außendurchmesser des Bremsstutzens 16.3, so dass die Schlingfederbremse 22 den Bremsstutzen 16.3 in Einbaulage eng umschließt bzw. bei Rotation in Spannrichtung als Bremse fungiert und in entgegengesetzter Richtung den Bremsstutzen 16.3 freigibt. Die Schlingfederbremse 22 umfasst ferner einen nicht dargestellten, von der äußeren Mantelfläche der Wicklungen abstehenden Haltearm, der in eine Öffnung eingesteckt ist und die Schlingfederbremse 22 fixiert. Die Schlingfederbremse 22 ermöglicht es, das Lineargetriebe möglichst leichtgängig auszubilden, gleichzeitig aber ein ungewolltes Rücklaufen des Linearantriebes zu vermeiden, wenn der Elektromotor 10 nicht unter Spannung steht.

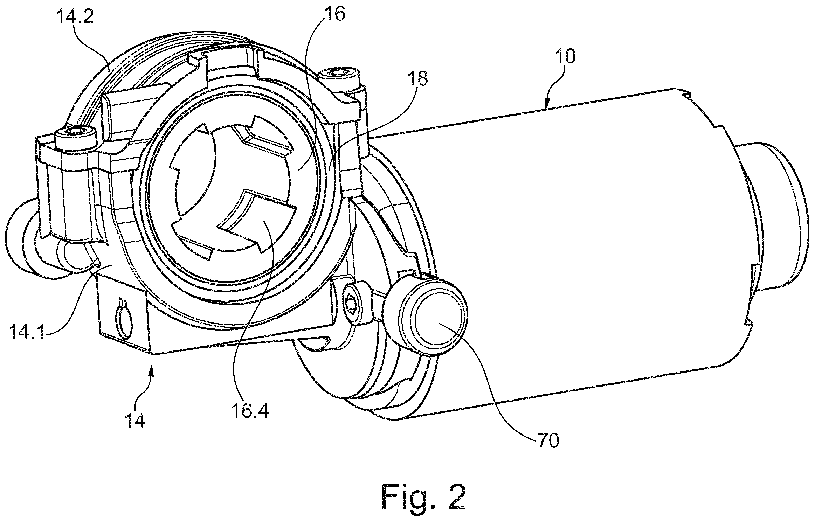

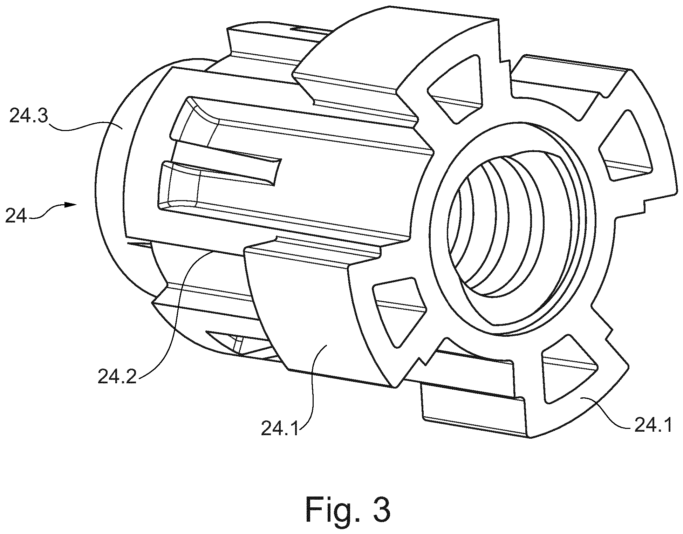

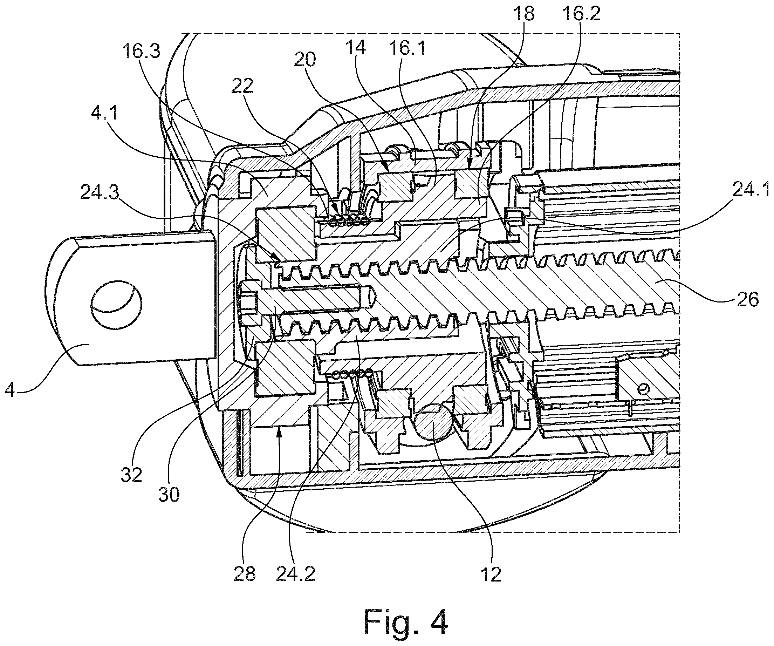

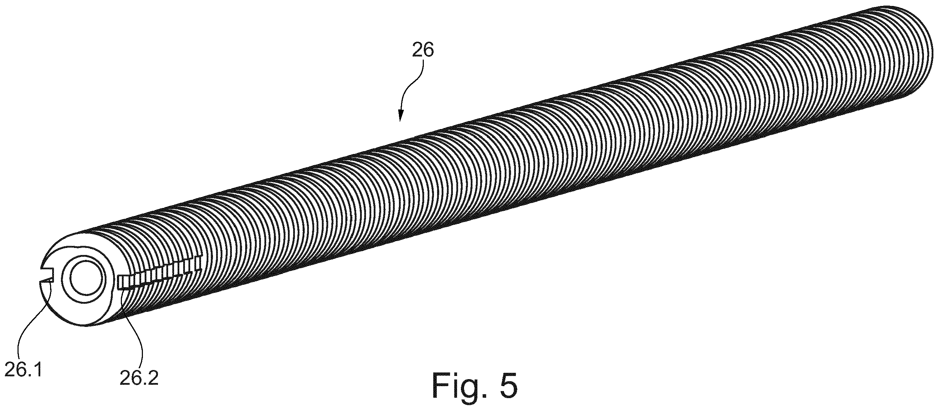

Gemäß Figur 2 weist bei der in den Figuren 1 bis 7 dargestellten ersten Ausführungsform des Lineargetriebes ohne Kupplung die innere Mantelfläche der Hohlachse 16.2 insgesamt vier, jeweils zwei sich paarweise diametral gegenüberliegende und sich radial nach außen erstreckende Ausnehmungen 16.4 auf. In diese Ausnehmungen 16.4 greifen in Einbaulage von einem zentralen, hohlzylindrischen Spindelstutzen 24.2 des Spindelhalters 24 radial abragende Flanken 24.1 ein, die also komplementär zu den Ausnehmungen 16.4 des Schneckenrads 16 ausgebildet sind und somit eine formschlüssige und drehfeste Verbindung zwischen dem Schneckenrad 16 und dem in diesem aufgenommenen Spindelhalter 24 realisieren.

Der Spindelstutzen 24.2 des Spindelhalters 24 nimmt in Einbaulage eine Spindel 26 auf, wozu die innere Mantelfläche des Spindelhalters 24 ein komplementär zu dieser Spindel 26 ausgebildetes Innengewinde aufweist. Vorzugsweise weist die Spindel 26 ein Trapezgewinde auf. Am Hinterende weist der Spindelstutzen 24.2 einen angeformten Absatz mit reduziertem Außenquerschnitt zur Bildung eines Lagersitzes 24.3 auf. Auf diesem Lagersitz 24.3 sitzt der Innenring eines hinteren Lagers 28 auf, das mit seinem Außenring in einer Buchse 4.1 des hinteren Gabelkopfes 4 sitzt. Das hintere, getriebeseitige Ende der Spindel 26 weist ein Sackloch mit einem Innengewinde auf, in welches eine Spannschraube 30 eingedreht ist, die eine Andrückscheibe 32 mit einem Absatz gegen den Innenring des hinteren Lagers 28 drückt und dieses somit gegen den durch den Lagersitz 24.3 gebildeten hinteren Absatz des Spindelhalters 24 drückt.

Die drehfeste Verbindung zwischen dem Spindelhalter 24 und der Spindel 26 wird dadurch realisiert, dass die Spindel 26 an dem getriebeseitigen Hinterende sich über eine Länge von etwa 25 mm in Längsrichtung erstreckende und diametral gegenüberliegende Einschnitte 26.1, 26.2 aufweist, in welche nicht dargestellte Spannstifte bzw. Spannhülsen eingeschlagen werden, welche beim Einschlagen die Gewindegänge des Innengewindes des Spindelhalters 24 verformen und somit eine drehfeste Verbindung zwischen dem Spindelhalter 24 und der in diesem aufgenommenen Spindel 26 verwirklicht.

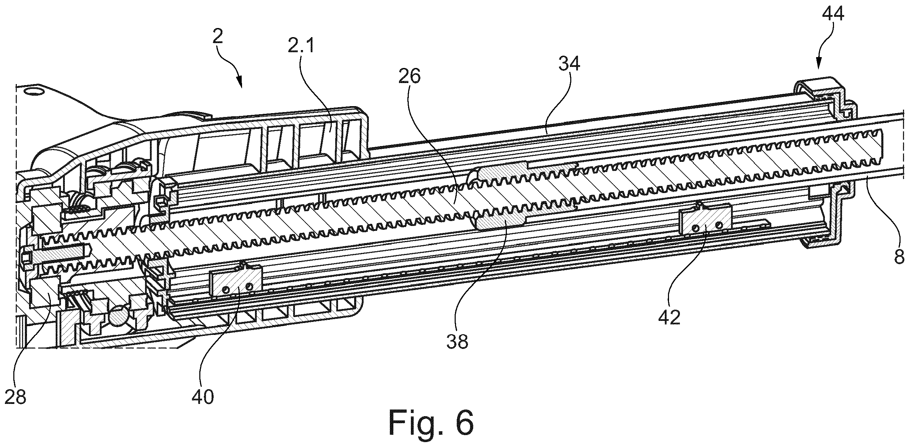

Gemäß Figur 6 ist das getriebeseitige Hinterende des Teleskoprohrs in dem Gehäuse 2 eingefasst und wird durch mehrere am Gehäuse 2 angeformte Halterippen 2.1 gehalten, die innenseitig einstückig an dem Gehäuse 2 angeformt sind.

Innerhalb des mittleren Hubrohrraums 36 ist in dem Außenrohr 34 eine längsverschieblich angeordnete Spindelmutter 38 mit einem Innengewinde vorgesehen, welches die Spindel 26 kämmt, welches also durch eine über den Motor und die Getriebeeinheit bewirkten Rotation der Spindel 26 in eine translatorische Bewegung umgesetzt wird, um das Hubrohr 8 relativ zu dem Außenrohr 34 zu bewegen. Zwei unterseitig in dem Außenrohr 34 angeordnete Endschalter 40, 42 begrenzen in bekannter Weise den maximalen Verstellweg der Spindelmutter 38 innerhalb des Außenrohrs 34. Sobald die Spindelmutter 38 mit der hinterseitigen Verbreiterung einen Taster der Endschalter 40, 42 berührt, stoppt der Elektromotor die Bewegung des Hubrohrs 8.

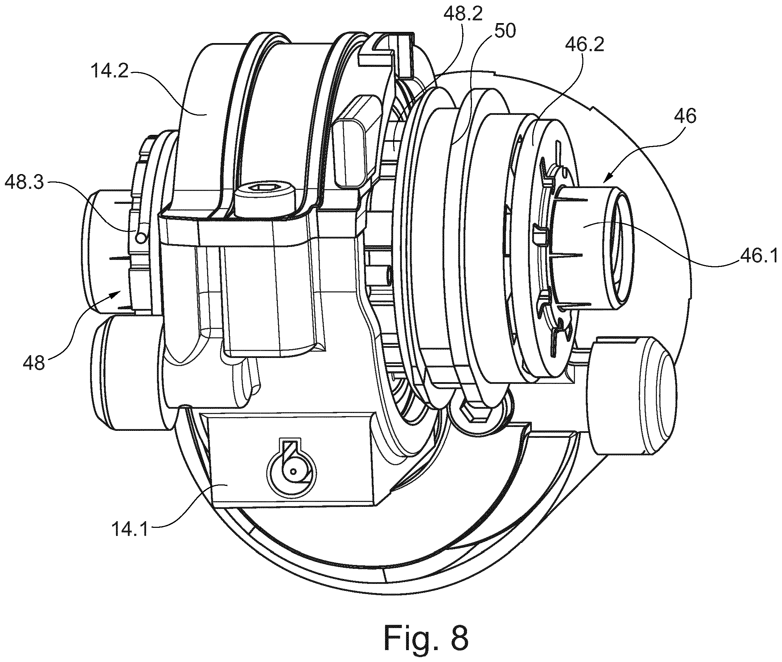

Die Figuren 8 bis 13 zeigen die zweite Ausführungsform des Lineargetriebes mit der Kupplung zur Durchführung einer Notverstellung. Bei dieser Ausgestaltung weist das wiederum in den beiden Halbschalen 14.1,14.2 des Getriebewinkels 14 von dem im Elektromotor drehbar angetriebenen aufgenommenen Schneckenrad 48 zudem einen Kupplungsstutzen 48.2 auf, welcher radial aus der Ebene mit den Zahnflanken gegenüberliegend von dem Bremsstutzen 48.3 abragt. Dieser Kupplungsstutzen 48.2 ist außenseitig mit mehreren radial nach außen ragenden Keilen ausgestaltet, die mit komplementär ausgebildeten Ausnehmungen auf der Innenseite der verschieblich auf dem Kupplungsstutzen 48.2 angeordneten Schiebehülse 50 der Kupplung eingreift.

Der Spindelhalter 46 umfasst bei dieser Ausgestaltung wieder einen sich zentral erstreckenden Spindelstutzen 46.1, der ausgebildet zur innenseitigen Aufnahme der Spindel 26 ist und weist ferner einen radial von der äußeren Mantelfläche des Spindelstutzen 46.1 abragenden Kupplungsflansch 46.2 auf, der an seinen dem Kupplungsstutzen 48.2 des Schneckenrads 48 zugewandten Seite Vorsprünge zum Eingriff in die innenseitig an der Schiebehülse 50 ausgebildeten Nuten aufweist.

Figur 8 stellt die Schiebehülse 50 in der eingekuppelten Stellung dar, in welcher das Schneckenrad 48 das Drehmoment auf den Spindelhalter 46 mit der darin in der zuvor beschriebenen Weise befestigten Spindel 26 überträgt, also durch Einbringen von Spannstiften in die beiden Einschnitte 26.1, 26.2 an dem Getriebeende der Spindel zwischen dem Spindelstutzen 46.1 und der Spindel 26.

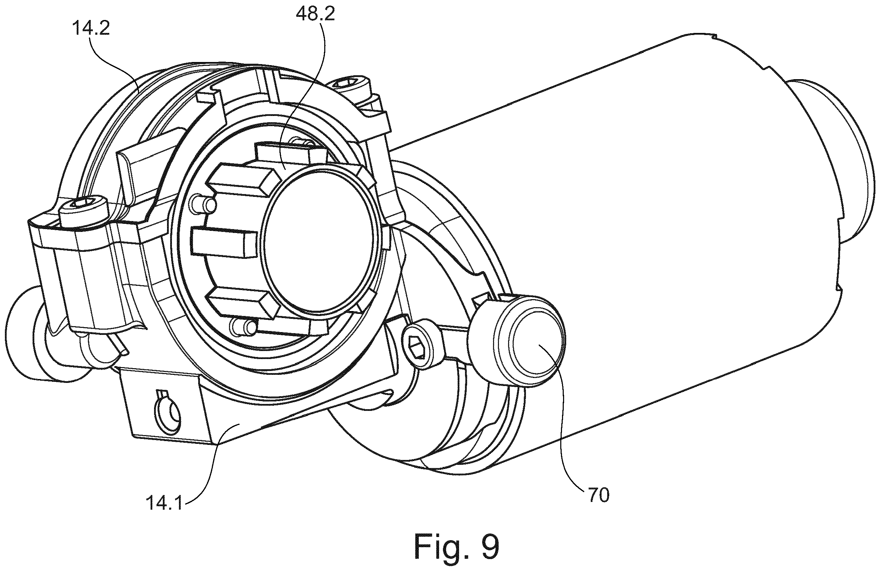

Figur 9 zeigt eine perspektivische Seitenansicht des Elektromotors 10 mit dem Getriebewinkel 14 bei eingesetztem Schneckenrad 48, wobei hier besonders deutlich der als Keilwelle ausgebildete Kupplungsstutzen 48.2 erkennbar ist.

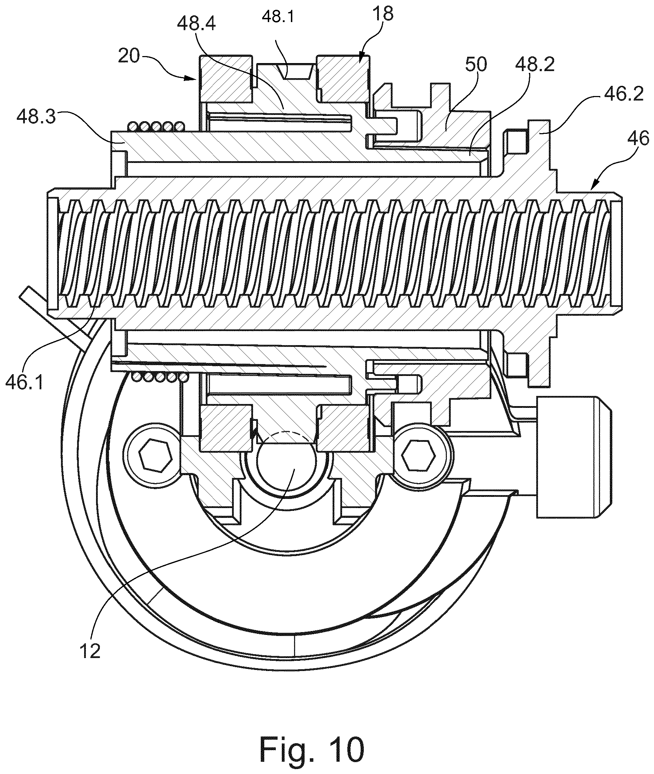

Figur 10 zeigt einen stirnseitigen Längsschnitt durch das Schneckenrad 48 und den Spindelhalter 46 mit seinem Kupplungsflansch 46.2 in Freigabestellung, also ausgekuppelt zur Notlösung.

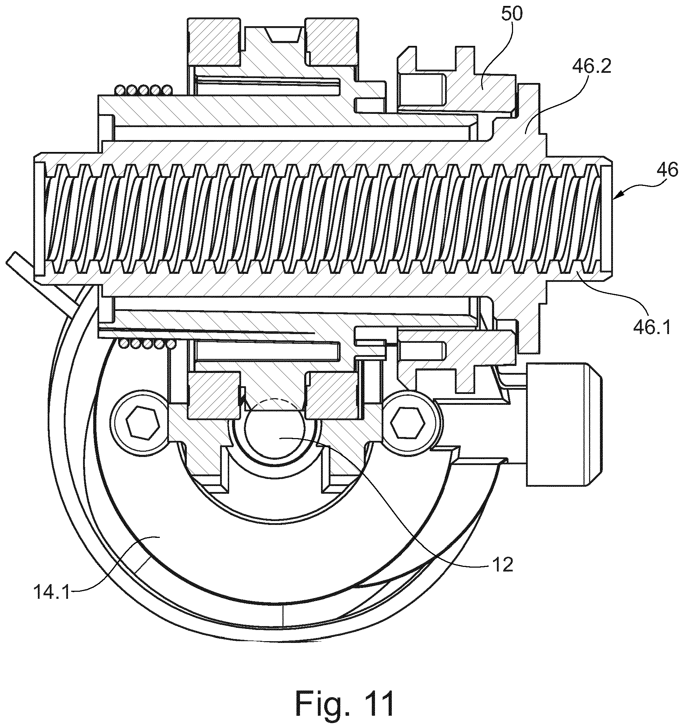

Figur 11 zeigt hingegen die Schiebehülse 50 in der eingekuppelten Stellung zu Übertragung des Drehmoments von dem Schneckenrad 48 auf den Spindelhalter 46.

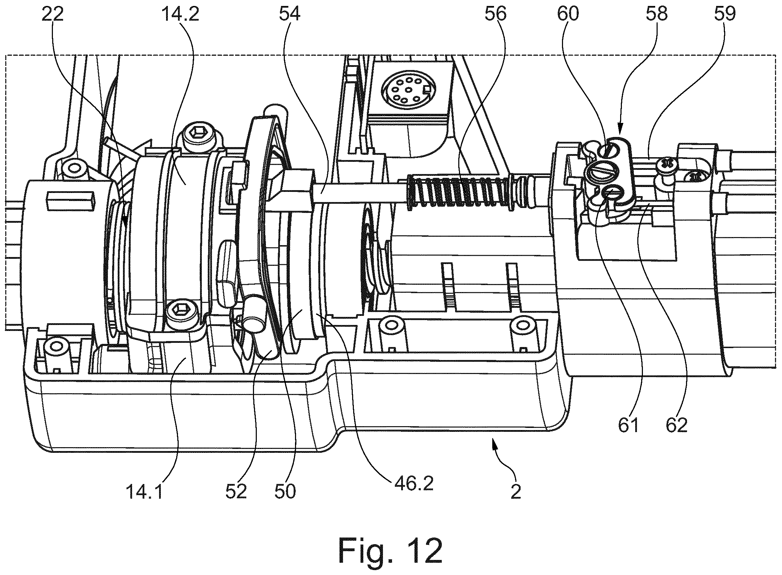

Figur 12 zeigt die Notlösekupplung in der unbelasteten, also eingekuppelten Eingriffstellung, in welcher die schwenkbar in der Mitte am Gehäuse gelagerte Wippe 52 die axial verschiebbare Schiebemuffe 50 auf den Kupplungsstutzen 46.2 des Spindelhalters 46 drückt und mit der an diesem ebenfalls ausgebildeten Keilverzahnung in Eingriff bringt.

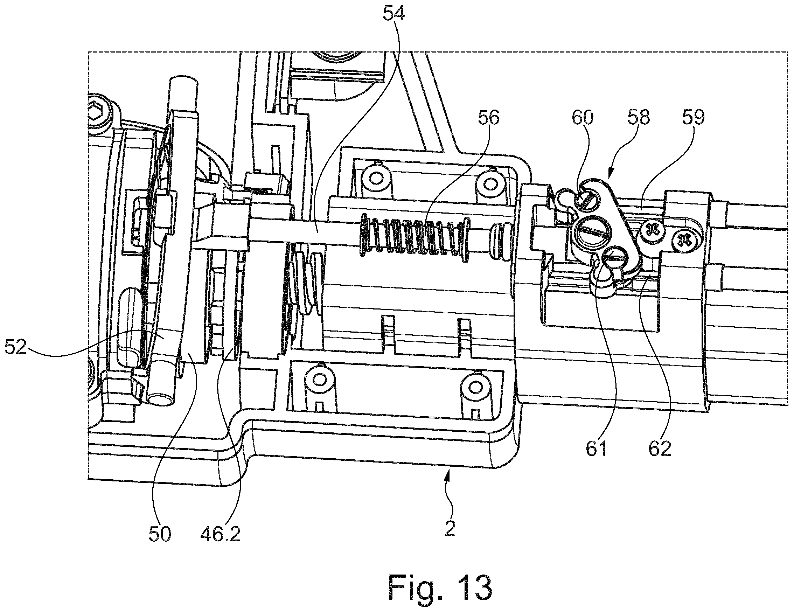

Figur 13 zeigt eine vergrößerte isometrische Draufsicht bei Betätigung des Bowdenzugs 62 im Rahmen der Notlösung. Das an dem Ende des Bowdenzugs 62 angeordnete Seilkausche 61 dreht den Bowdenzughalter 58 um den mittleren Befestigungszapfen und zieht die Zugstange 54 gegen die Federspannung der Feder 56 in dem Gehäuse zurück, so dass die Schiebehülse 50 aus der in Figur 12 dargestellten eingekuppelten Eingriffstellung in die in Figur 13 dargestellte ausgekuppelte Freilauf bzw. Freigabegabestellung überführt wird. In dieser Position, in welcher die Schiebhülse 50 also axial in der Figur nach links verschoben ist, liegt also ein Freilauf vor, so dass sich ein mit der Spindelmutter verbundenes Teil des Krankenbettes sofort absenken kann.

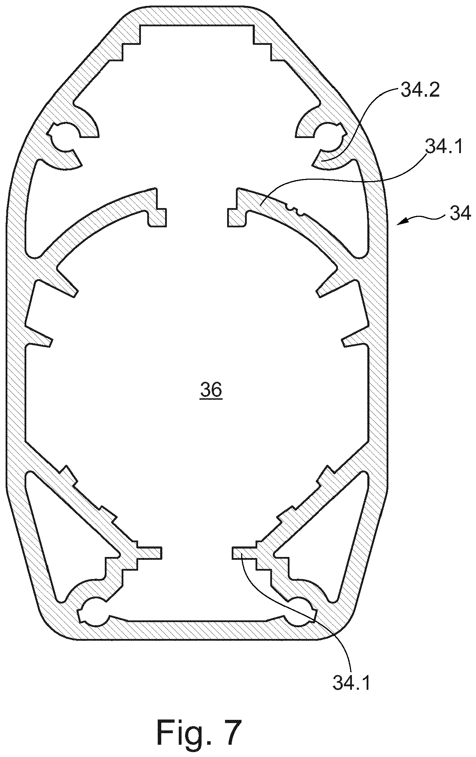

Figur 7 zeigt einen Querschnitt des in dem Gehäuse 2 aufgenommenen Außenrohrs 34, welches mehrere von der äußeren Mantelfläche nach innen ragende Stege 34.1 oder Rippen zur Bildung eines mittleren Hubrohrraums 36 aufweisen, in dem das in der Figur 7 nicht dargestellte Hubrohr 8 verschieblich geführt ist. Daneben sind innenseitig in dem Außenrohr 34 mehrere Schraubkanäle 34.2 angeformt, in die an den Stirnenden angeordnete, kappenartige Stirnabdeckungen 44 zum Verschließen des Außenrohrs 34 bzw. Teleskoprohrs befestigbar sind.

Gut erkennbar ist in der Figur 6 die an dem stirnseitigen Vorderende des Außenrohrs 34 befestigte kappenartige Stirnabdeckung 44 zur abdichtenden und längsverschieblichen Lagerung des Hubrohrs 8 innerhalb des Außenrohrs 34 und gleichzeitiges Verschließen des Außenrohrs 34 gegenüber dem Eintritt von Druck- und Spritzwasser gemäß IP67W.

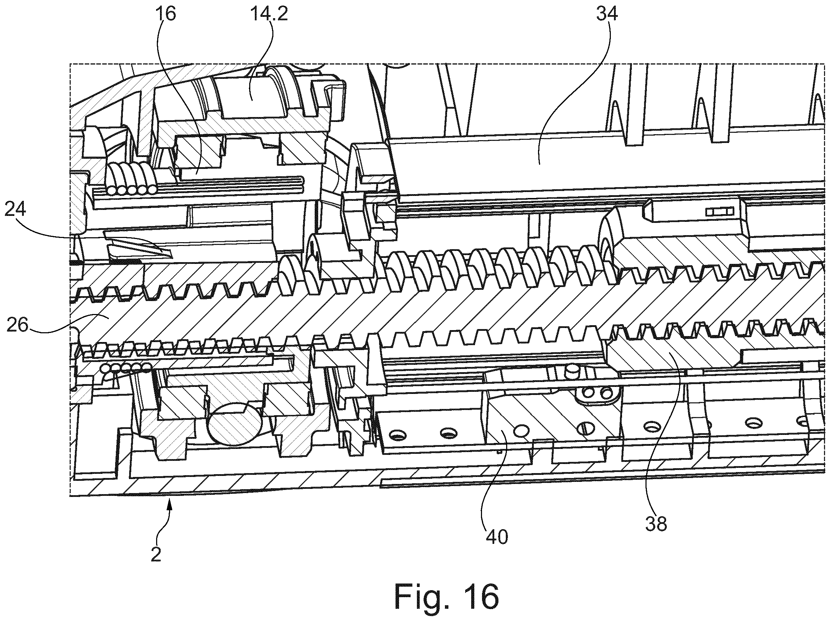

Figur 16 zeigt den Linearantrieb gemäß der ersten Ausführungsform ohne Kupplung zur Verdeutlichung des zusätzlich möglichen Einzugs des Hubrohrs 8 nach innen, welches durch Weglassen der Kupplung realisiert wird, so dass mit der Ausführungsform ohne Kupplung ein um bis zu 35 mm weiteres Einfahren des Hubrohrs 8 in das Außenrohr 34 möglich ist.

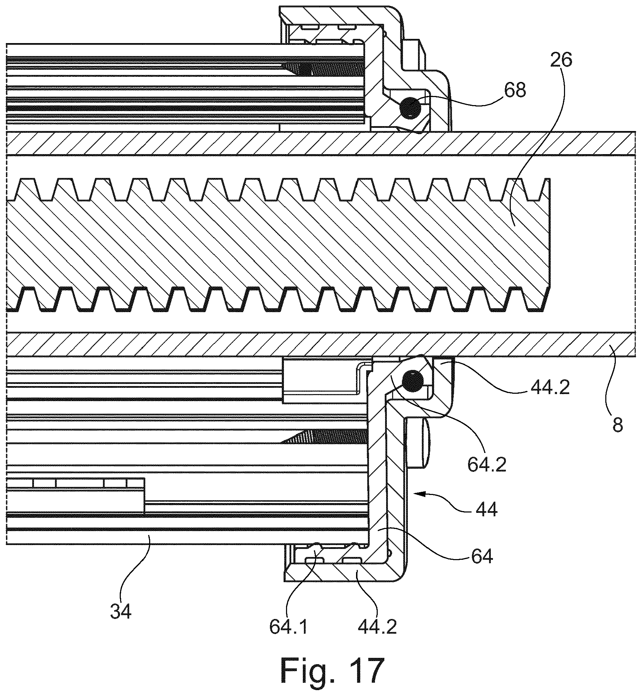

Figur 17 verdeutlicht den Aufbau dieser erfindungsgemäßen Stirnabdeckung 44 genauer. Diese umfasst ein elastische Dichtung 64, die eine an der Stirnseite des Außenrohrs 34 anliegende Hauptdichtebene definiert und am Außenrand einen quer zu dieser Hauptdichtebene nach hinten erstreckenden, umlaufenden Bund 64.1 mit inneren und äußeren Dichtlippen aufweist, die unter Vorspannung an der Außenseite des Außenrohrs 34 und der Innenseite eines komplementär ausgebildeten Bundes 44.2 der Stirnabdeckung 44 sitzt. Ferner weist Dichtung 64 einen aus der Hauptdichtebene nach vorne ragenden Dichtstutzen 64.2 mit einer innenseitigen Dichtlippe auf, der an der Außenseite des Hubrohrs 8 abgleitet und unter Federspannung durch eine umlaufende Ringfeder 68 unter permanenter Vorspannung gehalten wird. Die Stirnabdeckung 44 ist erfindungsgemäß zudem als Hubrohrführungskappe ausgebildet, stellt also eine verlängerte, nach außen ragende Stütze für das Hubrohr 8 bereit. Das Hubrohr 8 wird auf der Innenseite in dem Außenrohr 34 am Stirnende gehalten durch eine hohlzylindrische Buchse 66, die mit einem vorderseitigen Anschlagflansch in das Stirnende zwischen Außenrohr 34 und dem Hubrohr eingesetzt ist und eine erste Hubrohrführung bildet. Die Stirnabdeckung 44 umfasst zudem einen von der Außenrohr abdeckenden, primären Abdeckungsfläche nach vorne ragende - zweite - Hubrohrführung 44.1 auf, die zudem ein Ringraum definiert, der die Ringfeder 68 der Federdichtung aufnimmt. Im vorliegenden Fall wird somit die Auflagelänge von der inneren Buchse 66 bis zur außenseitigen Hubrohrführung 44.1 von 53 auf 61 mm verlängert.

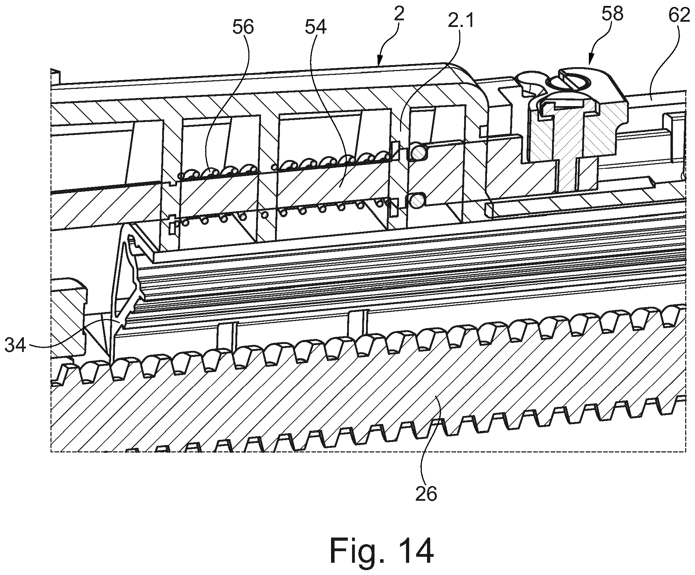

Figur 14 zeigt einen vergrößerten Längsschnitt des oberen Endes des Lineargetriebes bei aufgesetztem Gehäusedeckel und darin montierter Zugstange 54, welche gegenüber innenseitig ausgebildeten Halterippen 2.1 federvorgespannt ist und an deren hinteren Ende der Bowdenzughalter 58 über den drehbar in das Ende der Zugstange 54 eingeschraubten, zentralen Drehzapfen beweglich gelagert ist.

Der Elektromotor 10 ist vorzugsweise gummigelagert zur Kompensation von Schwingungen und zur Geräuschreduktion, wobei vorzugsweise mehrere Gummistopfen 70 auf den Elektromotor 10 aufgesetzt sind, welche an einem jeweiligen Gegenpart bzw. Fügepartner anliegen.

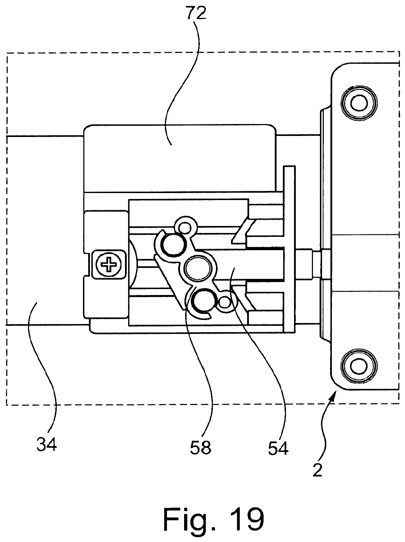

Die Figur 19 zeigt eine vergrößerte Draufsicht einer alternativ ausgebildeten Notverstellung bzw. Notkupplung mit dem auf einem Zapfen 72 am vorderen Stirnende der Zugstange 54 drehbar aufgeschnappter Bowdenzughalter 58. Wie bei der in den Figuren 12 bis 14 dargestellten ersten Ausführungsform weist der Bowdenzughalter 58 Öffnungen zum Einsatz der endseitigen Seilkauschen 60, 61 auf (nicht dargestellt). Im Gegensatz zur ersten Ausführungsform gemäß den Figuren 12 bis 14 sind die rückseitigen, entgegen der Zugrichtung angeordneten Anlageflächen nicht gerade ausgebildet, sondern ragen von der mittleren Führung der Zugstange 54 in einem Winkel von etwa 45° abgeschrägt nach hinten. Durch diese Ausgestaltung wird erzielt, dass bei einer einseitigen Betätigung des Bowdenzughalters 58 bzw. dessen Betätigung auf einer Seite der nicht betätigte Bowdenzug auf der anderen Seite gespannt wird und somit ein Herausspringen dieses nichtbelasteten Bowdenzugs verhindert wird.

Zusätzlich sind zur Realisierung eines harmonischen Bewegungsablaufs zwischen den Bauteilen Rundungen zwischen der Rückseite des Bowdenzughalters 58 und der rückseitigen Anlagefläche ausgebildet, die vorzugsweise als halbkreisförmige Vorsprünge an der Rückseite des Bowdenzughalters gestaltet sind.

Schließlich ist der Bowdenzughalter 58 bei dieser Ausführungsform integriert in eine Schelle 72, welche auf das Außenrohr 34 des Linearantriebs aufgeschoben ist.

Der Gegenstand der vorliegenden Erfindung ergibt sich nicht nur aus dem Gegenstand der einzelnen Patentansprüche, sondern aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

### Bezugszeichenliste

- 2: Gehäuse
- 2.1: Halterippe
- 4: hinterer Gabelkopf
- 4.1: Buchse
- 6: vorderer Gabelkopf
- 8: Hubrohr
- 10: Elektromotor
- 12: Schneckenwelle
- 14: Getriebewinkel
- 14.1: erste Halbschale
- 14.2: zweite Halbschale
- 16: Schneckenrad
- 16.1: Zahnflanke
- 16.2: Hohlachse
- 16.3: Bremsstutzen
- 16.4: Ausnehmung
- 18, 20: Lager
- 22: Schlingfederbremse
- 24: Spindelhalter
- 24.1: Flanke
- 24.2: Spindelstutzen
- 24.3: Lagersitz
- 26: Spindel
- 26.1, 26.2: Einschnitt
- 28: hinteres Lager
- 30: Spannschraube
- 32: Andrückscheibe
- 34: Außenrohr
- 34.1: Steg
- 34.2: Schraubkanal
- 36: Hubrohrraum
- 38: Spindelmutter
- 40, 42: Endschalter
- 44: Stirnabdeckung
- 44.1: Hubrohrführung
- 44.2: Bund
- 46: Spindelhalter
- 46.1: Spindelstutzen
- 46.2: Kupplungsflansch
- 48: Schneckenrad
- 48.1: Zahnflanke
- 48.2: Kupplungsstutzen
- 48.3: Bremsstutzen
- 48.4: Hohlachse
- 50: Schiebehülse
- 52: Wippe
- 54: Zugstange
- 56: Druckfeder
- 58: Bowdenzughalter
- 60, 61: Seilkausche
- 59, 62: Bowdenzug
- 64: Dichtung
- 64.1: Bund
- 64.2: Dichtstutzen
- 66: Buchse
- 68: Ringfeder
- 70: Gummistopfen
- 72: Schelle

## Patentansprüche

1. Teleskoprohr, insbesondere zur Verwendung in einem Linearantrieb, das Teleskoprohr umfassend ein im Wesentlichen stationäres Außenrohr (34) ausgebildet zur Aufnahme eines relativ zu diesem längsverschieblichen Hubrohrs (8), einem - hinteren - Antriebsende, durch welches sich eine motorisch angetriebene Spindel (26) erstreckt, auf der eine durch Drehung der Spindel (26) längsverschiebliche Spindelmutter (38) sitzt, die an dem Hubrohr (8) angreift, einem Vorderende, an welchem das Hubrohr (8) aus dem Außenrohr (34) herausragt, wobei das Vorderende des Teleskoprohrs durch eine Stirnabdeckung (44) verschließbar ist, welche eine Dichtung (64) aufweist,
die eine stirnseitig das Außenrohr abdeckende und eine eine Hauptdichtebene definierende Dichtplatte umfasst , um einen Medientritt entsprechend einer definierten Schutzart zu unterbinden, wobei
die Dichtung einen Dichtabschnitt mit einer Dichtlippe aufweist, die an der Außenseite des Hubrohrs (8) abgleitet und unter Federspannung durch eine umlaufende Ringfeder (68) unter permanenter Vorspannung gehalten wird,
wobei die Dichtplatte an einer äußeren Umfangsfläche einen Außenrand zur umgreifenden Anlage an dem Außenrohr umfasst
wobei die Stirnabdeckung eine sich in einer Verschlussebene erstreckende Aufsatzkappe umfasst, die in Einbaulage quer zu einer Längsachse des Teleskoprohrs angeordnet ist,
und einen außenseitig und quer nach hinten von der Verschlussebene erstreckenden, außenseitigen Umfangsrand zum außenseitigen Einfassen des Außenrohrs (34) und
einen nach vorne aus der Verschlussebene ausgebildeten Aufnahmeraum für den Dichtabschnitt und die Ringfeder (68) umfasst, und wobei die Stirnabdeckung (44) ferner zur Führung des Hubrohrs (8) ausgebildet ist.

2. Teleskoprohr nach Anspruch 1, **DADURCH GEKENNZEICHNET, DASS** die Feder eine Spiralfeder (68) umfasst.

3. Teleskoprohr nach einem der vorhergehenden Ansprüche, **DADURCH GEKENNZEICHNET, DASS** die Stirnabdeckung einen inneren Führungsabschnitt und einen äußeren Führungsabschnitt aufweist.

4. Teleskoprohr nach Anspruch 3, **DADURCH GEKENNZEICHNET, DASS** der innere Führungsabschnitt eine in das Außenrohr einsetzbare Buchse (66) umfasst und der äußere Führungsabschnitt eine Hubrohrführung (44.1) aufweist.

5. Teleskoprohr nach einem der Ansprüche 1 bis 4, **DADURCH GEKENNZEICHNET, DASS** der Aufnahmeraum eine zweite Hubrohrführung bildet.

## Claims

1. Telescopic tube, in particular for use in a linear drive, the telescopic tube comprising a substantially stationary outer tube (34) adapted to receive a lifting tube (8) longitudinally displaceable relative thereto, a - rear - drive end through which extends a motor-driven spindle (26) on which is seated a spindle nut (38) longitudinally displaceable by rotation of the spindle (26) and which engages the lifting tube (8), a front end at which the lifting tube (8) projects from the outer tube (34), wherein the front end of the telescopic tube can be closed by a front cover (44) which has a seal (64) comprising a sealing plate covering the outer tube at the front end and defining a main sealing plane, in order to prevent media from entering in accordance with a defined protection type,
wherein the seal has a sealing section with a sealing lip which slides on the outside of the lifting tube (8) and is held under spring load by a circumferential.annular spring (68) under permanent pre-load,
wherein the sealing plate comprises, on an outer peripheral surface, an outer rim for engaging around the outer tube while abutting against the outer tube,
wherein the front cover comprises an attachment cap extending in a closure plane and arranged transversely to a longitudinal axis of the telescopic tube in the installation position,
and an outer peripheral edge extending outwardly and transversely rearwardly from the closure plane for externally enclosing the outer tube (34), and
a receiving space for the sealing portion and the annular spring (68) formed forwardly out of the closure plane, wherein the front cover (44) is further configured to guide the lift tube (8).

2. Telescopic tube according to claim 1, **characterized in that** the spring comprises a spiral spring (68).

3. Telescopic tube according to any one of the preceding claims, **characterized in that** the front cover comprises an inner guide section and an outer guide section.

4. Telescopic tube according to claim 3, **characterized in that** the inner guide section comprises a bushing (66) insertable into the outer tube and the outer guide section comprises a lifting tube guide (44.1).

5. Telescopic tube according to any one of claims 1 to 4, **characterized in that** the receiving space forms a second lifting tube guide.

## Revendications

1. Tube télescopique, en particulier pour l'utilisation dans un entraînement linéaire, le tube télescopique comprenant un tube extérieur (34) essentiellement stationnaire conçu pour recevoir un tube de levage (8) déplaçable longitudinalement par rapport à celui-ci, une extrémité d'entraînement - arrière - à travers laquelle s'étend une broche (26) entraînée par un moteur, sur laquelle repose un écrou de broche (38) déplaçable longitudinalement par rotation de la broche (26), qui s'engage sur le tube de levage (8), une extrémité avant au niveau de laquelle le tube de levage (8) dépasse du tube extérieur (34), l'extrémité avant du tube télescopique pouvant être fermée par un couvercle frontal (44) qui présente un joint d'étanchéité (64) qui comprend une plaque d'étanchéité recouvrant frontalement le tube extérieur et définissant un plan d'étanchéité principal, afin d'empêcher une entrée de fluide correspondant à un type de protection défini,
le joint d'étanchéité présentant une section d'étanchéité avec une lèvre d'étanchéité qui glisse sur le côté extérieur du tube de levage (8) et qui est maintenue en précontrainte permanente sous la tension d'un ressort par un ressort annulaire périphérique (68),
la plaque d'étanchéité comprenant sur une surface périphérique extérieure un bord extérieur pour un appui enveloppant sur le tube extérieur,
le couvercle frontal comprenant un chapeau qui s'étend dans un plan de fermeture et qui, en position de montage, est disposée transversalement à un axe longitudinal du tube télescopique,
et un bord périphérique extérieur s'étendant vers l'extérieur et transversalement vers l'arrière depuis le plan de fermeture pour entourer le tube extérieur (34) sur le côté extérieur, et
un espace de réception formé vers l'avant du plan de fermeture pour la section d'étanchéité et le ressort annulaire (68),
le couvercle frontal (44) étant en outre conçu pour guider le tube de levage (8).

2. Tube télescopique selon la revendication 1, **caractérisé en ce que** le ressort comprend un ressort spiral (68).

3. Tube télescopique selon l'une quelconque des revendications précédentes, **caractérisé en ce que** le couvercle frontal comprend une partie de guidage interne et une partie de guidage externe.

4. Tube télescopique selon la revendication 3, **caractérisé en ce que** la section de guidage intérieure comprend une douille (66) pouvant être insérée dans le tube extérieur et la section de guidage extérieure comprend un guide de tube de levage (44.1).

5. Tube télescopique selon l'une quelconque des revendications 1 à 4, **caractérisé en ce que** l'espace de réception forme un deuxième guide de tube de levage.
